# EUROPÄISCHE PATENTSCHRIFT

(11) **EP 2 171 416 B1**
(45) Veröffentlichungstag und Bekanntmachung des Hinweises auf die Patenterteilung: **15.06.2011**
(21) Anmeldenummer: 08786535.8
(22) Anmeldetag: 28.07.2008
(51) Int. Cl.: G01M 3/20, G01B 7/00

(54) **LECKSUCHGERÄT MIT POSITIONSBESTIMMUNGSSYSTEM FÜR DIE HANDGEFÜHRTE SONDE**
LEAK DETECTOR COMPRISING A POSITION DETERMINING SYSTEM FOR THE HAND-OPERATED PROBE
DÉTECTEUR DE FUITE À SYSTÈME DE DÉTERMINATION DE POSITION POUR SONDE MANUELLE

(30) Priorität: 31.07.2007 DE 102007035932
(43) Veröffentlichungstag der Anmeldung: 07.04.2010
(73) Patentinhaber: Inficon GmbH, 50968 Köln (DE)
(72) Erfinder: GROSSE BLEY, Werner, 53125 Bonn (DE); KÜSTER, Gerhard, 51109 Köln (DE)
(74) Vertreter: von Kreisler Selting Werner
(86) Internationale Anmeldenummer: PCT/EP2008/059894
(87) Internationale Veröffentlichungsnummer: WO 2009/016160

(56) Entgegenhaltungen:
- WO-A-03/008923
- WO-A-2006/069877
- DE-A1-102005 022 157
- US-A- 4 945 305

## Beschreibung

Die Erfindung betrifft ein Lecksuchgerät zur Erkennung von Lecks an einem Testobjekt.

Ein Lecksuchgerät ist beispielsweise beschrieben in DE 10 2005 022 157 A1 (Inficon). Dieses Lecksuchgerät weist eine Sonde auf, deren Sondenspitze an vorbestimmte Testbereiche eines Testobjekts angesetzt wird. Das Testobjekt ist mit einem Testgas, z. B. Helium, gefüllt. Austretendes Testgas wird durch die Sondenspitze von einem Grundgerät angesaugt und einem Testgasdetektor zugeführt, bei dem es sich beispielsweise um ein Massenspektrometer handelt. Bei Lecksuchgeräten wird das Testobjekt, beispielsweise eine Klimaanlage oder das Kühlaggregat eines Kühlschranks, mit einem Testgas gefüllt und mit einer Sonde wird festgestellt, ob aus dem Testobjekt Testgas austritt. Bei der industriellen Qualitätskontrolle von Produkten muss die Sondenspitze an bestimmte Testpunkte oder Testbereiche des Testobjekts angesetzt werden, an denen die Gefahr von Lecks besteht. Dabei wird die Sonde manuell an die kritischen Stellen bewegt. Eine Schwierigkeit besteht darin, sicherzustellen, dass die Sondenspitze an alle erforderlichen Testbereiche des Testobjekts herangeführt worden ist und lange genug an jedem Testbereich gehalten wurde. Es besteht die Gefahr, dass der Werker versehentlich Testbereiche auslässt oder andere Testbereiche übergeht, die er aus subjektiver Anschauung für unkritisch hält. Ein anderes Lecksuchverfahren sieht vor, dass das Testobjekt von außen punktuell mit einem Testgas besprüht wird, das aus einer Sondenspitze austritt. Das Innere des Testobjekts ist evakuiert und mit einem Testgasdetektor verbunden. Der Testgasdetektor erkennt, wenn von außen Testgas in das Testobjekt eingedrungen ist.

Der Erfindung liegt die Aufgabe zugrunde, ein Lecksuchgerät zu schaffen, das eine erhöhte Sicherheit gegen fehlerhafte Bedienung und das Übergehen von Testbereichen bietet.

Das erfindungsgemäße Lecksuchgerät ist durch die Merkmale des Anspruchs 1 bezeichnet. Es enthält ein Positionsbestimmungssystem zur berührungslosen Bestimmung der Position der Sondenspitze. Die Kontrolleinheit speichert eine Objektposition des Testobjekts und gibt ein Bestätigungssignal aus, wenn die durch das Positionsbestimmungssystem festgestellte Position der Sondenspitze in dem Testbereich liegt. Damit wird durch ein berührungsloses Positionsbestimmungssystem das Aufsuchen der einzelnen Testbereiche durch die Sondenspitze überwacht. Das Positionsbestimmungssystem bewirkt eine dreidimensionale Positionsbestimmung der Sondenspitze im Raum. In Verbindung mit der Kontrolleinheit bewirkt das Positionsbestimmungssystem eine Überwachung des manuellen Vorgangs der Lecksuche an vorbestimmten Testbereichen. Auf diese Weise können menschliche Fehler bei der Bedienung des Lecksuchgeräts vermieden werden. Außerdem ist eine Protokollierung des Testvorganges möglich, um später die vorschriftsmäßige und vollständige Abwicklung des Tests beweisen zu können.

Berührungslose Positionsbestimmungssysteme sind grundsätzlich bekannt. So beschreibt DE 199 55 646 A1 (BMW) ein Verfahren zur Zuordnung eines Werkzeugs zu einem auf einem Montageband beförderten Werkstück. Im Bereich des Montagebandes ist ein Sender angeordnet und am Werkzeug ein Empfänger. Aus der Laufzeit des Signals wird die Entfernung des Werkzeugs zu jedem Sender bestimmt. Außerdem gibt es Systeme mit GPS-ähnlicher Funkortung und Systeme basierend auf Triangulation mit IR-Laserdioden. Fast alle diese Systeme benötigen eine ungestörte Sichtverbindung zwischen Sender und Empfänger, die in industrieller Umgebung bei Anwesenheit eines Bedieners nicht sichergestellt werden kann.

US 4,945,305 (Ascension) beschreibt ein Positionsbestimmungssystem mit einem Sender, der ein gepulstes magnetisches Gleichfeld erzeugt, und einem am Objekt angeordneten Empfänger. Dieses Verfahren ist besonders geeignet zur Bestimmung einer Momentan-Position, Vergleich mit einer Soll-Position und Rückmeldung. Eine Beeinträchtigung durch nicht-magnetische Gegenstände in der Sichtlinie zwischen Sender und Empfänger gibt es nicht. Eine Restbeeinflussung durch große Massen an magnetisierbarem Metall, wie z. B. einem Kompressorblock und einer Kältemaschine, kann durch Kalibrierung eliminiert werden, da die zu prüfende Anordnung statisch ist. Dieses Verfahren hat sich für die Realisierung der Erfindung als besonders zweckmäßig erwiesen.

Das erfindungsgemäße Lecksuchgerät eignet sich insbesondere für die Durchführung des üblichen Lecksuchverfahrens, bei dem das Testobjekt mit einem Testgas gefüllt wird, und das Austreten des Testgases mit Hilfe der Sonde überprüft wird. Ein anderes Lecksuchsystem im Rahmen der vorliegenden Erfindung besteht darin, anstelle einer saugenden Sonde eine Sonde, aus der Testgas austritt, zu verwenden. Das Innere des Testobjekts wird in diesem Fall evakuiert und von außen werden Testbereiche des Testobjekts mit dem Testgas besprüht. Das Eindringen von Testgas in das Testobjekt weist auf ein Leck hin.

Für bestimmte Anwendungen reicht es aus, dass das Testobjekt eine vorbestimmte Objektposition einnimmt, beispielsweise auf eine Schablone gestellt wird. Damit ist die Objektposition fest. Die Daten der Objektposition sind in der Kontrolleinheit fest gespeichert. Wenn die Objektposition jedoch nicht genau vorgegeben ist, ist gemäß einer bevorzugten Weiterbildung der Erfindung die Versorgungs- und Auswerteeinheit dazu eingerichtet, in einer Vorphase die Objektposition des Testobjekts zu messen und danach den Testbereich zu bestimmen. Die Objektposition kann dadurch gemessen werden, dass die Sondenspitze an bestimmte Referenzpunkte des Testobjekts angesetzt wird, wobei die Positionen der Referenzpunkte gemessen werden. Daraus können dann Position und Ausrichtung des Testobjekts bestimmt werden.

Vorzugsweise weist das Positionsbestimmungssystem einen ortsfesten Sender auf, der ein gepulstes magnetisches Gleichfeld erzeugt, und die Sonde enthält einen auf das Gleichfeld reagierenden Empfänger. Diese Art der Ortsbestimmung hat gegenüber magnetischen Wechselfeldern den Vorteil, dass in Metallteilen keine Wirbelströme erzeugt werden. Es ist grundsätzlich möglich, den Sender an der Sonde zu befestigen und mehrere Empfänger ortsfest im Raum verteilt anzuordnen, um die Position der Sonde festzustellen. Sender und Empfänger können mit Ultraschall, Radiowellen, Infrarot oder auf andere Weise miteinander kommunizieren.

Für die Leckdetektion ist die Bestimmung des Ortes der Sondenspitze wichtig. Idealerweise ist der Empfänger des Positionsbestimmungssystems an der Sondenspitze angeordnet. Da die Sondenspitze aber aus dem Ende eines relativ schlanken Rohres besteht, können die Sensoren des Empfängers dort in einigen Fällen nicht untergebracht werden. Eine bevorzugte Ausführungsform der Erfindung sieht vor, dass der in einem Körper der Sonde angeordnete Empfänger des Positionsbestimmungssystems Sensoren aufweist, die eine Bestimmung von Position und Ausrichtung des Körpers der Sonde ermöglichen, und dass anhand der Daten von Position und Ausrichtung des Körpers der Sonde die Position der Sondenspitze ermittelt wird. Die Position wird durch drei translatorische Koordinaten x, y und z bestimmt und die Orientierungswinkel α, β, y werden ebenfalls bestimmt. Auf diese Weise wird die Position in sechs Freiheitsgraden ermittelt und die Positionsbestimmung erfolgt durch Auswertung von drei Feldvektoren eines gepulsten DC-Magnetfeldes. Durch die 6-Achsen-Auswertung ist es möglich, den Magnetfeldsensor an dem Körper der Sonde im Abstand von der Sondenspitze unterzubringen und dennoch die genaue Position der Sondenspitze zu ermitteln. Dies ist wichtig, da die Sondenspitze wegen des hohen mechanischen Abriebs auswechselbar gestaltet werden sollte und der teure und empfindliche Sensor dabei im Körper der Sonde verbleiben kann.

Die Erfindung ermöglicht eine Bedienerführung zu jedem einzelnen Testbereich des Testobjekts. Unter Testbereich wird ein Testpunkt oder ein umgebendes Kugelvolumen bezeichnet, in dem ein gültiger Testvorgang stattfinden kann.

Die Erfindung betrifft ferner ein Verfahren zum Untersuchen eines Testobjekts auf Lecks. Dieses Verfahren ist dadurch gekennzeichnet, dass die Position der Sondenspitze mit einem berührungslosen Positionsbestimmungssystem gemessen wird, und dass jeweils ein Bestätigungssignal erzeugt wird, wenn die gemessene Position sicher über eine bestimmte Mindestdauer mit der Position des Testbereichs übereinstimmt und ein eindeutiges Leckratensignal gemessen und gespeichert wurde.

Im Folgenden wird unter Bezugnahme auf die Zeichnungen ein Ausführungsbeispiel der Erfindung näher erläutert.

Es zeigen:
- Figur 1: eine schematische Darstellung eines Lecksuchgeräts nach der vorliegenden Erfindung und
- Figur 2: eine perspektivische Darstellung der Sonde.

Das dargestellte Lecksuchgerät arbeitet als Schnüffellecksucher. Dieser weist ein Grundgerät 10 auf, das generell in gleicher Weise ausgebildet ist, wie in DE 10 2005 022 157 A1 beschrieben. Das Grundgerät 10 enthält einen Vakuumerzeuger und einen Testgasdetektor, z. B. in Form eines Massenspektrometers. Von dem Grundgerät 10 führt ein flexibler Schlauch 11 zu der Sonde 12. Die Sonde 12 weist einen Handgriff 13 und einen Körper 14 auf. Von dem Körper 14 aus erstreckt sich ein Rohr 15, dessen offenes Ende die Sondenspitze 16 bildet. Der Schlauch 11 enthält ein Schlauchlumen, durch welches das im Grundgerät 10 erzeugte Vakuum durch die Sondenspitze 16 hindurch Außenluft ansaugt.

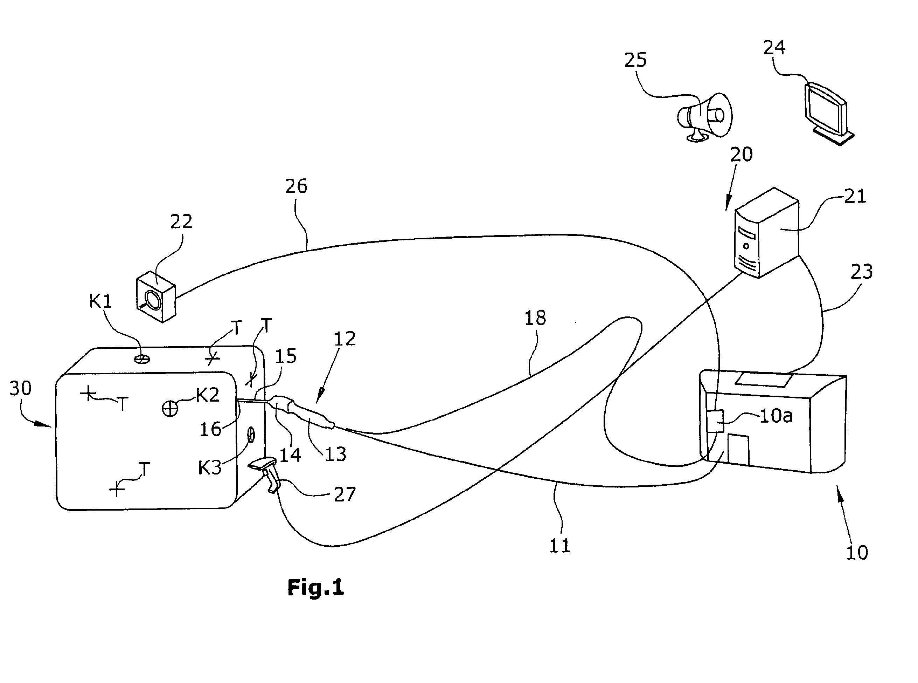

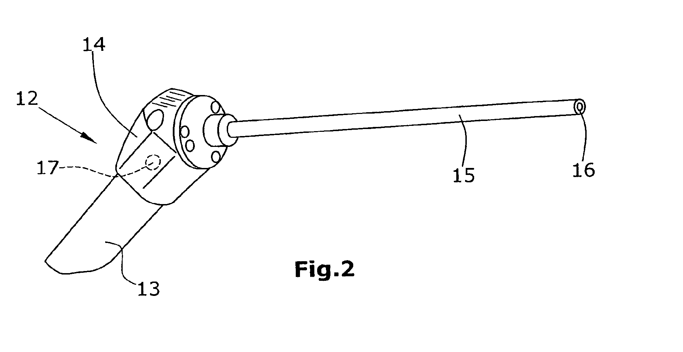

In Figur 2 ist die Sonde 12 in perspektivischer Darstellung vergrößert dargestellt. Der Körper 14 enthält einen Empfänger 17, der im vorliegenden Fall aus sechs elektromagnetischen Spulen besteht, welche auf Magnetfelder bzw. deren zeitliche Änderung reagieren. Der Empfänger 17 ist mit einem Empfängerkabel 18 (Figur 1) verbunden, das die Sensorsignale des Empfängers dem Grundgerät 10 zuführt.

Das Grundgerät 10 enthält eine Versorgungs- und Auswerteeinheit 10a, die Teil des Grundgerätes ist. Das Positionsbestimmungssystem 20 umfasst außer dem Empfänger 17, einen Sender 22 und eine Versorgungs- und Auswerteeinheit 10a. Die Versorgungs- und Auswerteeinheit 10a versorgt einerseits den Sender 22 mit Strom und andererseits wertet sie die Rohsignale des Empfängers 17 so aus, dass "wahre" Positionskoordinaten vom Grundgerät 10 an die Kontrolleinheit 21 übermittelt werden. Dabei werden das Erdmagnetfeld und sonstige Störeffekte sowie der Abstand des Empfängers 17 von der Sondenspitze 16 herausgerechnet. Außerdem berechnet die Versorgungs- und Auswerteeinheit 10a die Positionsabweichung zwischen der Position des Empfängers und der Sondenspitze. Die Empfängersignale werden in korrigierte Positionskoordinaten umgewandelt und diese werden über eine Schnittstelle an die Kontrolleinheit 21 ausgegeben. Die Kontrolleinheit 21 ist ein Computer, der über ein Kabel 23 mit dem Grundgerät 10 kommuniziert. Zu der Kontrolleinheit 21 gehört ein Bildschirm 24 und ein Signalgeber 25, beispielsweise in Form eines akustischen Signalerzeugers. Der Sender 22 ist über ein Senderkabel 26 mit dem Grundgerät 10 verbunden. Im Grundgerät 10 erfolgt also die Bestimmung der Positionskoordinaten aus den Signalen von Sender 22 und Empfänger 17, während die Festlegung der Soll-Koordinaten und die Speicherung von gemessenen Leckraten zusammen mit der zugehörigen Position durch die Kontrolleinheit 21 erFolgt.

Ferner ist ein Scanner 27 in Form eines Barcodelesers vorgesehen, der eine Kennzeichnung am Testobjekt 30 abtastet und den Typ des Testobjekts identifiziert. Der Scanner 27 ist mit der Kontrolleinheit 21 verbunden.

An dem Testobjekt 30, das in Figur 1 nur schematisch als Block dargestellt ist, sind mehrere Kalibrierpunkte K1, K2, K3 optisch sichtbar markiert. Diese Kalibrierpunkte sind hier auf rechtwinklig zueinander stehenden Flächen angebracht. Während einer Vorphase wird die Position des Testobjekts 30 bestimmt, indem die Sondenspitze 16 zu jedem der Kalibrierpunkte K1, K2, K3 geführt wird, während Sender 22 und Empfänger 17 zusammen mit der Versorgungs- und Auswerteeinheit 10a jeweils eine Positionsbestimmung vornehmen. Auf diese Weise werden die Positionsdaten des Testobjekts 30 ermittelt und dann in der Kontrolleinheit 21 gespeichert. Diese Positionsdaten der Objektposition des Testobjekts sind Referenzdaten für die einzelnen Testbereiche T. Die Testbereiche sind Stellen des Testobjekts, die speziell auf Lecks getestet werden müssen. Diese Testbereiche T sind in Bezug auf das Testobjekt festgelegt. Wenn die Objektposition ermittelt wurde, werden die Positionen der Testbereiche T (als Absolut-Positionen) berechnet.

Der Werker führt nun die Sondenspitze 16 zu jedem einzelnen Testbereich T. Sobald die Sondenspitze einen Testbereich T erreicht hat, ertönt am Signalgeber 25 ein Signal. Der Werker hält dann die Sondenspitze über eine bestimmte Mindestzeit an dem Testbereich. Bei Erreichen der Mindestzeit ertönt ein zweites Signal, das angibt, dass ein sinnvoller Messwert übernommen wurde und der Test an diesem Testbereich beendet ist.

Die Testbereiche T können durchnummeriert sein, um die Reihenfolge, in der die Testbereiche aufgesucht werden müssen, vorzugeben. Dadurch wird eine komplette Bedienerführung zu jedem potentiellen Leck ermöglicht. Es wird sichergestellt, dass kein Testbereich ausgelassen oder übergangen wurde. Außerdem wird sichergestellt, dass an jedem Testbereich die Sondenspitze hinreichend lange verweilt hat.

Im Rahmen der vorliegenden Erfindung wie sie in den Ansprüchen definiert ist sind zahlreiche Abweichungen von dem oben beschriebenen Ausführungsbeispiel möglich. So kann beispielsweise die Versorgungs- und Auswerteeinheit 10a auch außerhalb des Grundgerätes angeordnet sein, beispielsweise in einer separaten Box.

## Patentansprüche

1. Lecksuchgerät zur Erkennung von Lecks an einem Testobjekt (30), mit
- einem Grundgerät (10) und
- einer handgeführten Sonde (12), die eine Sondenspitze (16) aufweist und mit dem Grundgerät (10) über einen Schlauch (11) verbindbar ist,
**dadurch gekennzeichnet, dass**
ein Positionsbestimmungssystem (20) zur berührungslosen Bestimmung der Position der Sondenspitze (16) vorgesehen ist, dass eine Versorgungs- und Auswerteeinheit (10a) eine Objektposition des Testobjekts (30) sowie mindestens eine Position eines Testbereichs (T) am Testobjekt speichert, und dass ein Bestätigungssignal erzeugt wird, wenn die durch das Positionsbestimmungssystem (20) festgestellte Position der Sondenspitze (16) mit der Position des Testbereichs (T) übereinstimmt.

2. Lecksuchgerät nach Anspruch 1, **dadurch gekennzeichnet, dass** die Versorgungs- und Auswerteeinheit (10a) dazu eingerichtet ist, in einer Vorphase die Objektposition des Testobjekts (30) zu messen und danach die Absolut-Position mindestens eines Testbereichs (T) zu bestimmen.

3. Lecksuchgerät nach Anspruch 1 oder 2, **dadurch gekennzeichnet, dass** das Positionsbestimmungssystem (20) einen ortsfesten Sender (22) aufweist, der ein gepulstes magnetisches Gleichfeld erzeugt, und dass die Sonde (12) einen auf das Gleichfeld reagierenden Empfänger (17) enthält.

4. Lecksuchgerät nach Anspruch 3, **dadurch gekennzeichnet, dass** die Versorgungs- und Auswerteeinheit (10a) derart ausgebildet ist, dass sie den Sender (22) mit Stromimpulsen versorgt sowie die Empfängersignale in um die Positionsabweichung zwischen der Position des Empfängers (17) und der Sondenspitze (16) korrigierte Positionskoordinaten umwandelt und diese über eine Schnittstelle an eine Kontrolleinheit (21) ausgibt.

5. Lecksuchgerät nach einem der Ansprüche 3 oder 4, **dadurch gekennzeichnet, dass** der in einem Körper (14) der Sonde (12) angeordnete Empfänger (17) des Positionsbestimmungssystems (20) mehrere Sensoren aufweist, die eine Bestimmung von Position und Ausrichtung des Körpers (14) der Sonde (12) ermöglichen, und dass anhand der Daten von Position und Ausrichtung des Körpers der Sonde (12) die Position der Sondenspitze (16) ermittelt wird.

6. Lecksuchgerät nach Anspruch 5, **dadurch gekennzeichnet, dass** die Sondenspitze (16) an einem Rohr (15) vorgesehen ist, das auswechselbar an dem Körper (14) der Sonde (12) befestigt ist.

7. Verfahren zum Untersuchen eines Testobjekts auf Lecks mit einer Sonde (12) mit den Schritten
- Festlegen der Position mindestens eines Testbereichs (T) am Testobjekt (30),
- Positionieren einer Sondenspitze (16) der Sonde (12) im Testbereich (T),
- Feststellen, ob im Testbereich ein Testgas ein- oder austritt,
**dadurch gekennzeichnet, dass** die Position der Sondenspitze (16) mit einem berührungslosen Positionsbestimmungssystem (20) gemessen wird, und dass jeweils ein Bestätigungssignal erzeugt wird, wenn die gemessene Position über eine bestimmte Mindestdauer mit der Position des Testbereichs (T) übereinstimmt und ein sinnvoller Leckratenwert von einer Kontrolleinheit (21) übernommen und gespeichert wurde.

8. Verfahren nach Anspruch 7, **dadurch gekennzeichnet, dass** in einer Vorphase die Position des Testobjekts (30) bestimmt wird, indem die Sondenspitze (16) an Kalibrierpunkte (K1,K2,K3) des Testobjekts (30) gehalten wird und Korrekturdaten zur Positionsauswertung ermittelt und gespeichert werden.

## Claims

1. A leak detector for detection of leaks on a test object (30), comprising
- a basic unit (10) and
- a hand-guided probe (12) comprising a probe tip (16) and being connectible to the basic unit (10) via a hose (11),
**characterized in that**
a position determining system (20) is provided for contactless detection of the position of the probe tip (16), that a supply and evaluation unit (10a) stores an object position of the test object (30) as well as at least one position of a test region (T) on the test object, and that an actuation signal is generated when the position of the probe tip (16) detected by the position determining system (20) coincides with the position of the test region (T).

2. The leak detector according to claim 1, **characterized in that** the supply and evaluation unit (10a) is designed to measure, in a preparatory phase, the object position of the test object (30) and then to determine the absolute position of at least one test region (T).

3. The leak detector according to claim 1 or 2, **characterized in that** the position determining system (20) comprises a stationary transmitter (22) generating a pulsed DC magnetic field, and that the probe (12) includes a receiver (17) responsive to said DC field.

4. The leak detector according to claim 3, **characterized in that** the supply and evaluation unit (10a) is designed to supply current pulses to the transmitter (22) and to convert the receiver signals into position coordinates corrected by the positional difference between the position of the receiver (17) and the probe tip (16) and to output said position coordinates via an interface to a control unit (21).

5. The leak detector according to any one of claims 3 or 4, **characterized in that** said receiver (17) of the position determining system (20), arranged in a body (14) of the probe (12), comprises a plurality of sensors allowing for determination of the position and orientation of the body (14) of the probe (12), and that the position of the probe tip (16) is obtained on the basis of the data on the position and orientation of the body of the probe (12).

6. The leak detector according to claim 5, **characterized in that** the probe tip (16) is provided on a tube (15) exchangeably fastened to the body (14) of the probe (12).

7. A method for examining a test object for leaks with the aid of a probe (12), comprising the steps of
- fixing the position of at least one test region (T) on the test object (30),
- positioning a probe tip (16) of the probe (12) in the test region (T),
- detecting whether a test gas is leaking into or out of the test region,
**characterized in that** the position of the probe tip (16) is measured by a contactless position determining system (20) and that a respective actuating signal is generated when the measured position coincides with the position of the test region (T) for a specified minimum period of time and a usable leakage rate value has been taken over from a control unit (21) and has been stored.

8. The method according to claim 7, **characterized in that**, in a preparatory phase, the position of the test region (T) is determined **in that** the probe tip (16) is held to calibrating points (K1,K2,K3) of the test object (30) and correction data for position evaluation are obtained and stored.

## Revendications

1. Détecteur de fuite pour la détection de fuites dans un objet de test (30), comprenant
- un dispositif de base (10), et
- une sonde manuelle (12) avec une pointe de sonde (16) et apte à être connectée audit dispositif de base (10) par l'intermédiaire d'un tuyau (11), **caractérisé en ce qu'**
un système de détermination de position (20) est prévu pour la détermination sans contact de la position de ladite pointe de sonde (16), qu'une unité d'alimentation et d'évaluation (10a) enregistre une position d'objet dudit objet de test (30) et au moins une position d'une région de test (T) sur ledit objet de test, et qu'un signal d'actionnement est généré si la position de ladite pointe de sonde (16) déterminée par ledit système de détermination de position (20) correspond à la position de ladite région de test (T).

2. Détecteur de fuite selon la revendication 1, **caractérisé en ce que** ladite unité d'alimentation et d'évaluation (10a) est configurée pour mesurer, pendant une phase préparatoire, ladite position d'objet dudit objet de test (30) et pour déterminer, à partir de cette mesurage, la position absolue d'au moins une région de test (T).

3. Détecteur de fuite selon les revendications 1 ou 2, **caractérisé en ce que** ledit système de détermination de position (20) comprend un émetteur (22) stationnaire générant un champ continu magnétique pulsé, et que ladite sonde (12) comprend un récepteur (17) régissant audit champ continu.

4. Détecteur de fuite selon la revendication 3, **caractérisé en ce que** ladite unité d'alimentation et d'évaluation (10a) est configurée pour fournir des impulsions de courant audit émetteur (22) et pour convertir les signaux du récepteur en coordinats de position corrigés par la déviation de position entre la position dudit récepteur (17) et de ladite pointe de sonde (16) et qu'elle fait sortir ces coordinats à une unité de contrôle (21) à travers un interface.

5. Détecteur de fuite selon les revendications 3 ou 4, **caractérisé en ce que** ledit récepteur (17) dudit système de détermination de position (20), disposé dans un corps (14) de ladite sonde (12), comprend plusieurs capteurs permettant la détermination de la position et de l'orientation dudit corps (14) de la sonde (12), et que la position de ladite pointe de sonde (16) est déterminée à partir des données de position et d'orientation dudit corps de ladite sonde (12).

6. Détecteur de fuite selon la revendication 5, **caractérisé en ce que** ladite pointe de sonde (16) est prévue à un tuyau (15) attaché de manière échangeable audit corps (14) de ladite sonde (12).

7. Procédé pour sonder un objet de test pour fuites, utilisant une sonde (12), ledit procédé comprenant les étapes suivantes:
- définir la position d'au moins une région de test (T) sur ledit objet de test (30),
- positionner une pointe de sonde (16) de la sonde (12) dans la région de test (T),
- déterminer si un gaz de test entre dans ladite région de test ou échappe de cette région,
**caractérisé en ce que** ladite position de la pointe de sonde (16) est mesurée à l'aide d'un système de détermination de position (20) sans contact, et qu'un signal d'actionnement est généré chaque fois la position mesurée correspond à ladite position de ladite région de test (T) pour une durée minimale prédéterminée et une valeur raisonnable de taux de fuite a été acceptée et enregistrée par une unité de contrôle (21).

8. Procédé selon la revendication 7, **caractérisé en ce que**, pendant une phase préparatoire, la position dudit objet de test (30) est déterminée par mettant ladite pointe de sonde (16) à des point de calibration (K1, K2, K3) dudit objet de test (30) et par déterminant des données de correction pour l'évaluation de position et par enregistrant ces données.
